(19) Europäisches Patentamt
European Patent Office
Office européen des brevets

(11) **EP 4 610 623 A1**

(12) **EUROPEAN PATENT APPLICATION**
published in accordance with Art. 153(4) EPC

(43) Date of publication:
**03.09.2025 Bulletin 2025/36**

(21) Application number: 23896238.5

(22) Date of filing: **27.09.2023**

(51) International Patent Classification (IPC):
**G01N 3/18** (2006.01)   **G01N 3/04** (2006.01)
**G01N 3/06** (2006.01)

(52) Cooperative Patent Classification (CPC):
**G01N 3/04; G01N 3/06; G01N 3/18**

(86) International application number:
**PCT/CN2023/122014**

(87) International publication number:
**WO 2024/114081 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022 CN 202211500296**

(71) Applicants:
• **Comac Beijing Aircraft Technology Research
Institute
Beijing 102200 (CN)**
• **Commercial Aircraft Corporation of China, Ltd
Shanghai 200120 (CN)**

(72) Inventors:
• **HE, Tiren
Beijing 102200 (CN)**

• **GUO, Jin
Beijing 102200 (CN)**
• **MA, Zhiyang
Beijing 102200 (CN)**
• **XU, Jifeng
Beijing 102200 (CN)**
• **CENG, Jianjiang
Beijing 102200 (CN)**
• **ZHANG, Junhua
Beijing 102200 (CN)**
• **TONG, Mingbo
Beijing 102200 (CN)**
• **TANG, Ping
Beijing 102200 (CN)**

(74) Representative: **Nederlandsch Octrooibureau
P.O. Box 29720
2502 LS The Hague (NL)**

(54) **THERMAL TEST APPARATUS AND TEST METHOD FOR HYBRID CONNECTION STRUCTURE**

(57)   The present invention relates to the field of aviation technology, and in particular to a thermal testing apparatus of a hybrid connection structure and a test method. The thermal testing apparatus of a hybrid connection structure provided by this application includes a first connector, a second connector, and a temperature adjustment box. Loads can be applied to the hybrid connection structure via the first connector and the second connector for a mechanical test on the hybrid connection structure. The temperature adjustment box provides a temperature environment to the hybrid connection structure, and is used for recording strain of the hybrid connection structure at a preset temperature.

The temperature adjustment box can provide a preset temperature to the hybrid connection structure, and the loads are applied to the hybrid connection structure, enabling a static test on the hybrid connection structure at the preset temperature. This integrates both temperature and load factors to conduct a thermal test on the hybrid connection structure, making the test environment closer to real operating conditions. This application further provides a test method, which is based on the thermal testing apparatus of a hybrid connection structure described above and also achieves the foregoing technical effects.

**(Cont. next page)**

EP 4 610 623 A1

FIG. 1

## Description

## FIELD OF TECHNOLOGY

The present invention relates to the field of aviation technology, and in particular to a thermal testing apparatus of a hybrid connection structure and a test method.

## BACKGROUND

In the structural design of aircraft, composite materials and metal mechanical connection structures are adopted in the connection regions between wing ribs and panels, as well as between the wing ribs and spars. The structures of the composite materials and the metal structures have different thermal expansion coefficients. When temperature changes, materials with different properties in the composite materials and metal mechanical connection structures experience varying thermal deformations, resulting in internal thermal stress in the composite materials and metal mechanical connection structures under the constraint of overall deformation coordination. The thermal stress caused by the temperature change significantly impacts the failure of the composite materials and metal mechanical connection structures.

In related technologies, through experimental analysis of the mechanical behavior and failure modes of the composite materials and metal mechanical connection structures in a thermal environment, and mechanical analysis on composite material connection plates, the problem of excessively thick composite material connection plates due to overly large design margins can be effectively avoided. Additionally, the structural weight of the aircraft can be further reduced, more fully utilizing the potential load-bearing capacity of the composite materials.

However, the thermodynamic testing apparatus in the prior art, due to its limited load-bearing capacity, cannot perform mechanical tests on the connection structures in large-scale thermal testing apparatuses of hybrid connection structures. Additionally, the test conditions for thermodynamic testing are singular, leading to inaccurate test results.

## SUMMARY

The present invention provides a thermal testing apparatus of a hybrid connection structure and a test method, which can effectively resolve the above or other potential technical problems.

A first aspect of the present invention provides a thermal testing apparatus of a hybrid connection structure, for a thermal test of the hybrid connection structure, where the thermal testing apparatus of a hybrid connection structure includes a first connector, a second connector, and a temperature adjustment box. The first connector and the second connector are oppositely arranged to connect two ends of the hybrid connection structure, and loads are applied to the hybrid connection structure via the first connector and the second connector; and the temperature adjustment box is disposed between the first connector and the second connector, and configured to provide a preset temperature to the hybrid connection structure.

The thermal testing apparatus of a hybrid connection structure provided by this application is configured to perform a thermal test on the hybrid connection structure and includes the first connector, the second connector, and the temperature adjustment box. During the thermal test, loads can be applied to the hybrid connection structure via the first connector and the second connector for a mechanical test on the hybrid connection structure. The temperature adjustment box provides a preset temperature environment to the hybrid connection structure placed within the temperature adjustment box, generating coordinated deformation of the hybrid connection structure. Strain gauges are arranged at preset positions on the surface of the hybrid connection structure to record the strain of the hybrid connection structure at the preset temperature. Additionally, the temperature adjustment box can provide a preset temperature to the hybrid connection structure, and then the loads are applied to the hybrid connection structure, thereby enabling a static test on the hybrid connection structure at the preset temperature. This integrates both temperature and load factors to conduct the thermal test on the hybrid connection structure, making the test environment more complex and closer to real operating conditions.

In an optional embodiment according to the first aspect, the first connector and the second connector are structurally the same, each including a first connection mechanism and a second connection mechanism, the first connection mechanism and the second connection mechanism are hinged via an axle pin, and an end of the first connection mechanism away from the second connection mechanism is configured to connect to the hybrid connection structure.

This arrangement effectively reduces the problem of uneven stress on the hybrid connection structure during load application.

In an optional embodiment according to the first aspect, the first connection mechanism is connected to the hybrid connection structure via a clamping mechanism, the clamping mechanism having a clamping space for clamping the hybrid connection structure; the first connection mechanism is provided with an accommodation space for accommodating the clamping mechanism, and the first connection mechanism and the clamping mechanism are fastened by a fastener; and at least two fasteners are provided, the at least two fasteners being equidistantly arranged at a joint between the first connection mechanism and the clamping mechanism.

This arrangement ensures the stability of the connection of the hybrid connection structure, the stability of the connection between the first connection mechanism and the clamping mechanism, and the alignment of the loads, thus effectively ensuring that the loads applied to the hybrid connection structure are more uniform.

For example, the fastener is a connecting pin.

In an optional embodiment according to the first aspect, the thermal testing apparatus of a hybrid connection structure further includes a height compensation component (not shown in the figure). The height compensation component includes a fixing mechanism and a telescopic support mechanism, the telescopic support mechanism has one end connected to the fixing mechanism, and the other end configured to support the hybrid connection structure, and the telescopic support mechanism is liftable relative to the fixing mechanism.

This arrangement effectively resolves the significant misalignment problem of the hybrid connection structure caused by tolerance, gap, and the like, further ensuring the accuracy of the test structure. In addition, this enables the thermal testing apparatus provided by the embodiments of this application to be applicable to large-scale test pieces.

In an optional embodiment according to the first aspect, the temperature adjustment box includes a first box body and a second box body that are connected detachably, and the first box body and the second box body jointly form a temperature adjustment space for accommodating the hybrid connection structure. The first box body has two openings communicating with the temperature adjustment space, the two openings respectively facing the first connector and the second connector. The second box body has an accommodation cavity, a partition plate is disposed between the accommodation cavity and the temperature adjustment space, a cooling member and a heating member are disposed in the accommodation cavity, the partition plate is provided with a cooling medium inlet, and the cooling member delivers a cooling medium to the temperature adjustment space via the cooling medium inlet.

This arrangement is conducive to placing the hybrid connection structure in the temperature adjustment space, achieving adjustment of the temperature within the temperature adjustment space.

In an optional embodiment according to the first aspect, the accommodation cavity is further provided with a centrifugal fan, and the partition plate is provided with an air inlet and an air outlet; and/or

the second box body is provided with a lifting leg on a side away from the first box body, such that the second box body leaves or approaches the hybrid connection structure; and/or
the first box body has an observation window for observing the hybrid connection structure in the temperature adjustment space; and/or
a temperature sensor is disposed in the temperature adjustment space.

It should be noted that the centrifugal fan is more conducive to the cold circulation or hot circulation of the temperature within the temperature adjustment space, allowing the temperature within the temperature adjustment space to be stable more quickly. The arrangement of the lifting leg facilitates the adjustment of the height of the second box body based on the height of the hybrid connection structure after connection, so that the entire temperature adjustment box fits better with the hybrid connection structure, thereby improving the efficiency of heating or cooling. The arrangement of an observation window facilitates user observation of the hybrid connection structure placed in the temperature adjustment space.

A second aspect of the present invention provides a test method, based on the thermal testing apparatus of a hybrid connection structure described above, including:

assembling the hybrid connection structure by connecting the two ends of the hybrid connection structure to the first connector and the second connector respectively, mounting the temperature adjustment box at a preset position of the hybrid connection structure, and arranging a strain gauge at a preset position of the hybrid connection structure;
performing a load test by applying the loads to the two ends of the hybrid connection structure via the first connector and the second connector until the hybrid connection structure is damaged; and
performing a temperature test by using the temperature adjustment box to adjust a temperature to a preset temperature, and recording strain data of the hybrid connection structure.

The test method provided by the embodiments of this application, based on the thermal testing apparatus of a hybrid connection structure described above, also allows for the conduction of the static test, temperature strain test, and static test in a preset temperature environment on the hybrid connection structure, effectively ensuring a more complex test environment that is closer to real operating conditions.

In an optional embodiment according to the second aspect, before the load test, the method further includes:

adjusting heights of two sides of the hybrid connection structure to align the loads applied to the two ends of the hybrid connection structure on a same horizontal line; and
calculating a height difference between two symmetrical sides of the hybrid connection structure, and using the height compensation component to lift a lower side of the hybrid connection structure until the two symmetrical sides of the hybrid connection structure are located on the same horizontal line.

This arrangement effectively resolves the significant misalignment problem of the hybrid connection structure caused by tolerance, gap, and the like, further ensuring the accuracy of the test structure. In addition, this enables the thermal testing apparatus provided by the embodiments of this application to be applicable to large-scale test pieces.

In an optional embodiment according to the second aspect, the temperature test specifically includes:

performing a heating test by activating a heating mode of the temperature adjustment box, performing heating at intervals of a preset temperature segment, and maintaining the temperature within a preset duration when the temperature of the temperature adjustment space of the temperature adjustment box is stable at a first target temperature, and recording readings of the strain gauge, where the hybrid connection structure is provided with multiple strain gauges for measuring strain of the hybrid connection structure;

performing a cooling test by activating a cooling mode of the temperature adjustment box, performing cooling from the first target temperature at intervals of a preset temperature segment, maintaining the temperature within a preset duration when the temperature of the temperature adjustment space of the temperature adjustment box is stable at a second target temperature, and recording the readings of the strain gauge; and

repeating the heating test and the cooling test a preset number of times.

This arrangement achieves the mechanical test on the hybrid connection structure in high-temperature and low-temperature environments.

In an optional embodiment according to the second aspect, the temperature test further includes:

after the repeating the heating test and the cooling test a preset number of times, when the temperature of the temperature adjustment space of the temperature adjustment box is stable at the first target temperature, applying the loads to the two ends of the hybrid connection structure via the first connector and the second connector until the hybrid connection structure is damaged; or

after the repeating the heating test and the cooling test a preset number of times, when the temperature of the temperature adjustment space of the temperature adjustment box is stable at the second target temperature, applying the loads to the two ends of the hybrid connection structure via the first connector and the second connector until the hybrid connection structure is damaged.

This arrangement is conducive to performing the static test on the hybrid connection structure placed in a high-temperature environment and performing the static test on the hybrid connection structure placed in a low-temperature environment.

For additional aspects and advantages of the present invention, some will be given in the following description, and some will become apparent in the following description or will be understood in the practice of the present invention.

**BRIEF DESCRIPTION OF THE DRAWINGS**

Through the following detailed description with reference to the drawings, the above and other objects, features, and advantages of the embodiments of the present invention will become easier to understand. In the drawings, multiple embodiments of the present invention will be described in an exemplary and non-limiting manner.

FIG. 1 is a schematic diagram of an overall structure of a thermal testing apparatus of a hybrid connection structure according to an embodiment of this application.

FIG. 2 is a schematic structural diagram of the thermal testing apparatus of a hybrid connection structure without a temperature adjustment box according to an embodiment of this application.

FIG. 3 is a schematic structural diagram of the thermal testing apparatus of a hybrid connection structure without the temperature adjustment box and a testing machine clamping member according to an embodiment of this application.

FIG. 4 is a schematic structural diagram of a first connection mechanism of the thermal testing apparatus of a hybrid connection structure according to an embodiment of this application.

FIG. 5 is a schematic structural diagram of a second connection mechanism of the thermal testing apparatus of a hybrid connection structure according to an embodiment of this application.

FIG. 6 is a schematic structural diagram of a clamping mechanism of the thermal testing apparatus of a hybrid connection structure according to an embodiment of this application.

FIG. 7 is a schematic structural diagram of the temperature adjustment box of the thermal testing apparatus of a hybrid connection structure according to an embodiment of this application.

FIG. 8 is a schematic structural diagram of a first box body of the thermal testing apparatus of a hybrid connection structure according to an embodiment of this application.

FIG. 9 is a schematic structural diagram of a second box body of the thermal testing apparatus of a hybrid connection structure according to an embodiment of this application.

FIG. 10 is a schematic structural diagram of a centrifugal fan of the thermal testing apparatus of a hybrid connection structure according to an embodiment of this application.

FIG. 11 is a schematic structural diagram of the hybrid connection structure to be tested in the thermal testing apparatus of a hybrid connection structure from a first perspective according to an embodiment of this application.

FIG. 12 is a flowchart of a temperature test in a thermal test method for the hybrid connection structure according to an embodiment of this application.

FIG. 13 is a schematic structural diagram of a strain gauge being arranged in the hybrid connection structure to be tested in the thermal testing apparatus of a hybrid connection structure from the first perspective according to an embodiment of this application.

FIG. 14 is a schematic structural diagram of the strain gauge being arranged in the hybrid connection structure to be tested in the thermal testing apparatus of a hybrid connection structure from a second perspective according to an embodiment of this application.

FIG. 15 is an enlarged view of portion I in FIG. 14.

Reference signs in the drawings:

10. thermal testing apparatus of a hybrid connection structure; 11. first connector; 111. first connection mechanism; 112. second connection mechanism; 113. axle pin; 114. clamping mechanism; 115. fastener; 12. second connector; 13. temperature adjustment box; 131. first box body; 1311. latch; 1312. observation window; 132. second box body; 1322. heating member; 1323. centrifugal fan; 1324. motor; 1325. lifting leg; 133. partition plate; 1332. cooling medium inlet; 14. testing machine clamping member; 15. height compensation component; 16. hybrid connection structure; and 17. strain gauge.

DESCRIPTION OF THE EMBODIMENTS

The embodiments of the present invention are described in detail below. Examples of the embodiments are shown in the accompanying drawings, and reference signs that are the same or similar always indicate the same or similar components or components with the same or similar functions. The embodiments described below with reference to the drawings are illustrative and merely for explaining the present invention. They should not be construed as limitations on the present invention.

It should be understood that the following embodiments do not limit the execution order of the steps in the method protected by the present invention. The steps of the method of the present invention can be performed in any possible order and in a cyclic manner, provided they do not contradict each other.

In the description of the present invention, the orientations or positional relationships indicated by the technical terms "center", "longitudinal", "transverse", "length", "width", "thickness", "upper", "lower", "front", "rear", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for the ease and brevity of description of the present invention rather than indicating or implying that the means or components mentioned must have specific orientations or must be constructed or manipulated according to specific orientations, and therefore shall not be construed as any limitations on embodiments of the present invention.

In addition, the terms "first" and "second" are merely for the purpose of description, and shall not be understood as any indication or implication of relative importance or any implicit indication of the number of technical features indicated. Therefore, a feature limited by "first" or "second" may explicitly or implicitly include at least one feature. In the description of the present invention, "multiple" means at least two, such as two or three, unless otherwise specifically defined.

In the present invention, unless otherwise specified and defined explicitly, the terms "mount", "connect", "join", and "fasten" should be understood in their general senses. For example, they may refer to a fixed connection, a detachable connection, or an integral connection, may refer to a mechanical connection, and may refer to a direct connection, an indirect connection via an intermediate medium, an internal communication between two elements, or an interaction between two elements. A person of ordinary skill in the art can understand specific meanings of these terms in the present invention based on specific situations.

In the description of this specification, descriptions referring to the terms "an embodiment", "some embodiments", "an example", "a specific example", or "some examples" mean the specific features, structures, materials or characteristics described with reference to the embodiment or example are included in at least one embodiment or example of the present invention. In this specification, illustrative expressions of these terms do not necessarily refer to the same embodiment or example. In addition, the specific feature, structure, material or characteristic described can be combined in any appropriate manner in any one or more embodiments or examples. Besides, without mutual conflict, persons skilled in the art can incorporate and combine different embodiments or examples and features of the different embodiments or examples described in this specification.

In the structural design of aircraft, composite materials and metal mechanical connection structures are adopted in the connection regions between wing ribs and panels, as well as between the wing ribs and spars. The structures of the composite materials and the metal structures have different thermal expansion coefficients. When temperature changes, materials with different properties in the composite materials and metal mechanical connection structures experience varying thermal deformations, resulting in internal thermal stress in the composite materials and metal mechanical connection structures under the constraint of overall deformation coordination. The thermal stress caused by the temperature change significantly impacts the failure of the composite materials and metal mechanical connection structures. In related technologies, through experimental analysis of the mechanical behavior and failure modes of the composite materials and metal mechanical connection structures in a thermal environment, and mechanical analysis on composite material connection plates, the problem of excessively thick composite material connection plates due to overly large design margins can be effectively avoided. Additionally, the structural weight of the aircraft can be further reduced, more fully utilizing the potential load-bearing capacity of the composite materials. However, the thermodynamic testing apparatus in the prior art, due to its limited load-bearing capacity, cannot perform mechanical tests on the connection structures in large-scale thermal testing apparatuses of hybrid connection structures. Additionally, the test conditions for thermodynamic testing are singular, leading to inaccurate test results.

In view of this, this application provides a thermal testing apparatus of a hybrid connection structure, which is configured to perform a thermal test on the hybrid connection structure and includes a first connector, a second connector, and a temperature adjustment box. During the thermal test, loads can be applied to the hybrid connection structure via the first connector and the second connector for a mechanical test on the hybrid connection structure. The temperature adjustment box provides a preset temperature environment to the hybrid connection structure placed within the temperature adjustment box, where a strain gauge is arranged at a preset position on the hybrid connection structure, so as to record the strain of the hybrid connection structure at the preset temperature. Additionally, the temperature adjustment box can provide a preset temperature to the hybrid connection structure, and then the loads are applied to the hybrid connection structure, thereby enabling a static test on the hybrid connection structure at the preset temperature. This integrates both temperature and load factors to conduct the thermal test on the hybrid connection structure, making the test environment more complex and closer to real operating conditions.

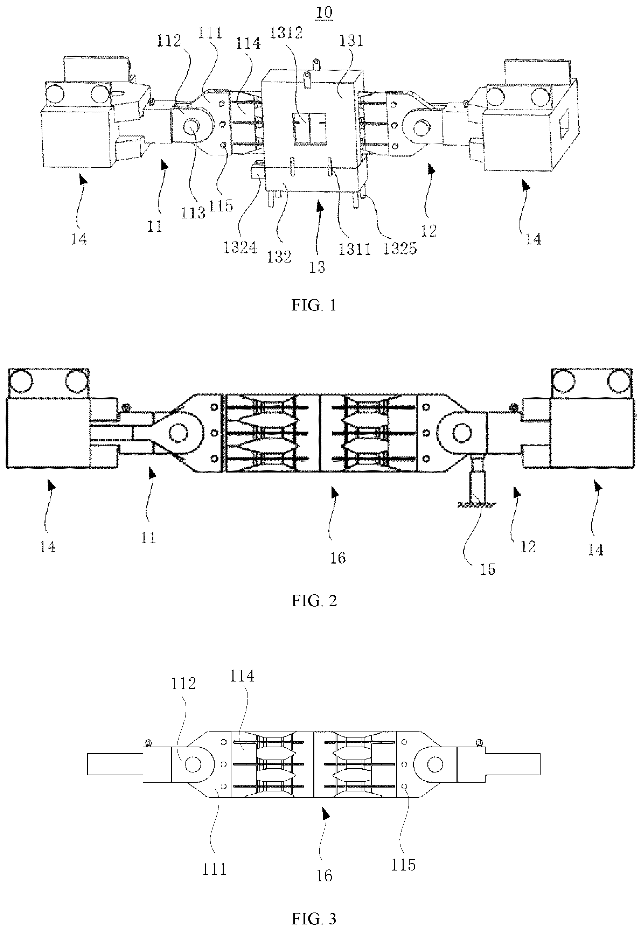

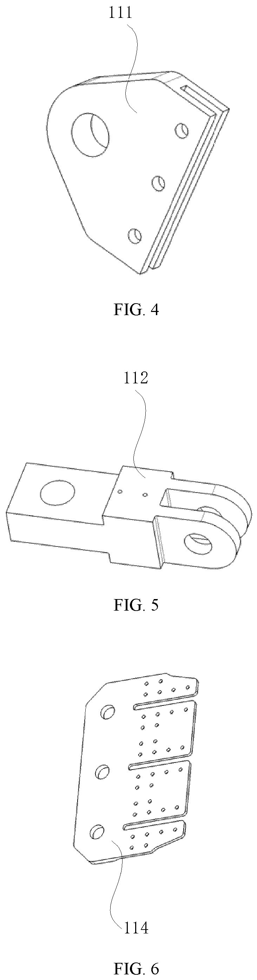

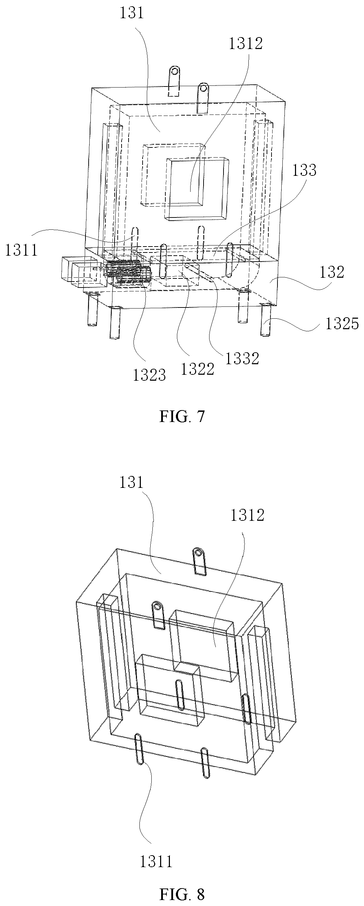

Referring to FIGs. 1 to 10, the thermal testing apparatus 10 of a hybrid connection structure provided by the embodiments of this present invention is configured to perform the thermal test on the hybrid connection structure 16. The thermal testing apparatus 10 of a hybrid connection structure includes the first connector 11, the second connector 12, and the temperature adjustment box 13. The first connector 11 and the second connector 12 are oppositely arranged to connect two ends of the hybrid connection structure 16, and loads are applied to the hybrid connection structure 16 via the first connector 11 and the second connector 12; and the temperature adjustment box 13 is disposed between the first connector 11 and the second connector 12, and configured to provide the preset temperature to the hybrid connection structure 16.

The thermal testing apparatus 10 of a hybrid connection structure provided by the embodiments of this application is configured to perform the thermal test on the hybrid connection structure 16 and includes the first connector 11, the second connector 12, and the temperature adjustment box 13. During the thermal test, loads can be applied to the hybrid connection structure 16 via the first connector 11 and the second connector 12 for a mechanical test on the hybrid connection structure 16. The temperature adjustment box 13 provides the preset temperature environment to the hybrid connection structure 16 placed within the temperature adjustment box 13, and is used for recording the strain of the hybrid connection structure 16 at the preset temperature. Additionally, the temperature adjustment box 13 can provide a preset temperature to the hybrid connection structure 16, and then the loads are applied to the hybrid connection structure 16, thereby enabling a static test on the hybrid connection structure 16 at the preset temperature. This integrates both temperature and load factors to conduct the thermal test on the hybrid connection structure 16, making the test results more accurate.

In an optional exemplary embodiment, the first connector 11 and the second connector 12 are structurally the same, each including a first connection mechanism 111 and a second connection mechanism 112, the first connection mechanism 111 and the second connection mechanism 112 are hinged via an axle pin 113, and an end of the first connection mechanism 111 away from the second connection mechanism 112 is configured to connect to the hybrid connection structure 16.

It should be noted that, in this embodiment, the first connector 11 and the second connector 12 are structurally the same, which facilitates more uniform load application at the two ends of the hybrid connection structure 16, avoiding the problem of uneven stress due to structural differences in the connectors. Specifically, the first connector 11 and the second connector 12 each include the first connection mechanism 111 and the second connection mechanism 112, the first connection mechanism 111 and the second connection mechanism 112 are hinged via the axle pin 113, and an end of the first connection mechanism 111 away from the second connection mechanism 112 is configured to connect to the hybrid connection structure 16. The first connection mechanism 111 and the second connection mechanism 112 are hinged via the axle pin 113, allowing the first connection mechanism 111 and the second connection mechanism 112 to have a certain degree of movement allowance during the connection of the hybrid connection structure 16 or the load application, thereby effectively ensuring the alignment of the loads applied to the hybrid connection structure 16 during the test process.

For example, the first connection mechanism 111 and the second connection mechanism 112 are each provided with a through hole, where the axle pin 113 passes through the through holes on the first connection mechanism 111 and the second connection mechanism 112, and both the first connection mechanism 111 and the second connection mechanism 112 can rotate around the axle pin.

In an optional exemplary embodiment, the first connection mechanism 111 is connected to the hybrid connection structure 16 via a clamping mechanism 114, the clamping mechanism 114 having a clamping space for clamping the hybrid connection structure 16; the first connection mechanism 111 is provided with an accommodation space for accommodating the clamping mechanism 114, and the first connection mechanism 111 and the clamping mechanism 114 are fastened by a fastener 115; and at least two fasteners 115 are provided, the at least two fasteners 115 being equidistantly arranged at a joint between the first connection mechanism 111 and the clamping mechanism 114.

It should be noted that, specifically, in this embodiment, the first connection mechanism 111 is connected to the hybrid connection structure 16 via the clamping mechanism 114, where the clamping mechanism 114 has the clamping space for clamping the hybrid connection structure 16, effectively ensuring the stability of the connection of the hybrid connection structure 16. In addition, the first connection mechanism 111 is provided with the accommodation space for accommodating the clamping mechanism 114, and the first connection mechanism 111 and the clamping mechanism 114 are fastened by the fasteners 115, thereby ensuring the stability of the connection between the first connection mechanism 111 and the clamping mechanism 114. Additionally, the at least two fasteners 115 are provided, which avoids the stress concentration problem during load application, and further, the at least two fasteners 115 are equidistantly arranged at the joint between the first connection mechanism 111 and the clamping mechanism 114, effectively ensuring that the loads applied to the hybrid connection structure 16 are more uniform.

For example, in this embodiment, three fasteners 115 are provided. The three fasteners 115 are equidistantly arranged at the joint between the first connection mechanism 111 and the clamping mechanism 114, thus allowing the load from the first connection mechanism 111 to be evenly divided into three parts applied to the hybrid connection structure 16, effectively ensuring that the loads applied to the hybrid connection structure 16 are more uniform. In addition, this enables the thermal testing apparatus provided by the embodiments of this application to be applicable to large-scale test pieces.

For example, during the test implementation, to make the stress on the hybrid connection structure 16 more uniform, the test load applied to the two ends of the hybrid connection structure 16 is $F_{jz}$, transmitted through the three equidistantly arranged fasteners 115 on the first connection mechanism 111 and the clamping mechanism 114. As shown in FIG. 2, $F_{jz}$ is decomposed into $F_{r1}$, $F_{x2}$, and $F_{x3}$, where the relationship between $F_{jz}$, $F_{r1}$, $F_{x2}$, and $F_{x3}$ satisfies the following formula:

$$F_{x1} = F_{x2} = F_{x3} = \frac{1}{3}F_{jz}$$

It can be understood that the specific number of fasteners 115 is not limited herein. In other specific embodiments, the number of fasteners 115 may further be set to two, four, or the like, based on the user's actual needs.

In an optional exemplary embodiment, the thermal testing apparatus further includes a height compensation component 15. The height compensation component 15 includes a fixing mechanism and a telescopic support mechanism, the telescopic support mechanism has one end connected to the fixing mechanism, and the other end configured to support the hybrid connection structure 16, and the telescopic support mechanism is liftable relative to the fixing mechanism.

It should be noted that, in this embodiment, the thermal testing apparatus further includes the height compensation component 15, where the height compensation component 15 is used to adjust the positions of the two sides of the hybrid connection structure 16 so that the loads applied to the two sides of the hybrid connection structure 16 are on the same horizontal line. This arrangement effectively resolves the significant misalignment problem of the hybrid connection structure 16 caused by tolerance, gap, and the like, further ensuring the accuracy of the test structure. In addition, this enables the thermal testing apparatus provided by the embodiments of this application to be applicable to large-scale test pieces.

The height compensation component 15 includes the fixing mechanism and the telescopic support mechanism, the telescopic support mechanism has one end connected to the fixing mechanism, and the other end configured to support the hybrid connection structure 16, and the telescopic support mechanism is liftable relative to the fixing mechanism. The support height of the telescopic support mechanism can be adjusted as needed, thereby effectively supporting the lower side of the hybrid connection structure 16.

For example, the height compensation component 15 is a hoisting jack.

In an optional exemplary embodiment, the temperature adjustment box 13 includes a first box body 131 and a second box body 132 that are connected detachably, and the first box body 131 and the second box body 132 jointly form a temperature adjustment space for accommodating the hybrid connection structure 16. The first box body 131 has two openings communicating with the temperature adjustment space, the two openings respectively facing the first connector 11 and the second connector 12. The second box body 132 has an accommodation cavity, a partition plate 133 is disposed between the accommodation cavity and the temperature adjustment space, a cooling member and a heating member 1322 are disposed in the accommodation cavity, the partition plate 133 is provided with a cooling medium inlet 1332, and the cooling member delivers a cooling medium to the temperature adjustment space via the cooling medium inlet 1332.

It should be noted that specifically, in this embodiment, the temperature adjustment box 13 is arranged to include the first box body 131 and the second box body 132 that are connected detachably, where the first box body 131 and the second box body 132 jointly form the temperature adjustment space for accommodating the hybrid connection structure 16. The first box body 131 has two openings communicating with the temperature adjustment space, the two openings respectively facing the first connector 11 and the second connector 12. Through this arrangement, during the mounting process, the second box body 132 is first placed at an intermediate position between the first connector 11 and the second connector 12, close to the intermediate position of the hybrid connection structure 16, and then the first box body 131 is mounted on top of the second box body 132, so that the hybrid connection structure 16 is placed within the temperature adjustment space, and the two sides of the hybrid connection structure 16 are respectively connected to the first connector 11 and the second connector 12 through the two openings on the first box body 131. This arrangement is conducive to placing the hybrid connection structure 16 in the temperature adjustment space.

Additionally, the second box body 132 has an accommodation cavity, a partition plate 133 is disposed between the accommodation cavity and the temperature adjustment space, a cooling member and a heating member 1322 are disposed in the accommodation cavity, the partition plate 133 is provided with a cooling medium inlet 1332, and the cooling member delivers a cooling medium to the temperature adjustment space via the cooling medium inlet 1332. The temperature within the temperature adjustment space can be increased by the heating member 1322, and the cooling member can deliver the cooling medium into the temperature adjustment space via the cooling medium inlet 1332, thereby reducing the temperature within the temperature adjustment space. This arrangement is conducive to achieving adjustment of the temperature within the temperature adjustment space.

For example, the first box body 131 and the second box body 132 are connected through the engagement of a latch 1311 and a slot. The first box body 131 is provided with the protruding latch 1311, and the second box body 132 is provided with the slot that matches the latch 1311.

It should be noted that this arrangement facilitates, during the mounting process, the corresponding engagement of the latch 1311 with the slot, ensuring the stability of the connection between the first box body 131 and the second box body 132. In addition, the latch 1311 and slot correspond to each other during mounting, also providing a guiding function during the mounting process.

It can be understood that the second box body 132 may alternatively be provided with the protruding latch 1311, and the first box body 131 may be provided with the slot that matches the latch 1311.

For example, in this embodiment, four latches 1311 are provided, and four slots are provided correspondingly. Two of the latches 1311 are spaced apart on a first side panel of the first box body 131, and the other two latches 1311 are arranged on a second side panel opposite the first side panel.

For example, in this embodiment, the first box body 131 and the second box body 132 form a vertical structure, where the first box body 131 is located on the upper side, and the second box body 132 is located on the lower side. During the specific mounting process, to minimize the impact on the mounting of the hybrid connection structure 16, the temperature test portion of the hybrid connection structure 16 is estimated during mounting, and this temperature test portion is aligned with the pre-positioned second box body 132. After the hybrid connection structure 16 is mounted, the first box body 131 is hoisted into place by the crane of the testing machine and connected to the second box body 132 through the latches 1311 and slots.

For example, the overall dimensions of the temperature adjustment box 13, formed by the first box body 131 and the second box body 132, may be set to 1100 mm × 600 mm × 1380 mm, where the dimensions of the temperature adjustment space are 950 mm × 400 mm × 980 mm. The temperature range achievable by the temperature adjustment box 13 is -60°C to +150°C, with a temperature fluctuation of less than or equal to ±1°C (no load), a temperature uniformity of less than or equal to ±2°C (no load), and a heating/cooling rate of 0.7°C to 20°C/min.

It can be understood that, in other specific embodiments, the user may adaptively adjust the above data as needed.

For example, the temperature adjustment box 13 adopts a double-layer structure, where the material of the inner and outer layers of the temperature adjustment box 13 may be 304SUS high-grade stainless steel. An insulation material fills the space between the inner and outer boxes, and the insulation material may be high-quality ultrafine glass fiber insulation cotton.

For example, a sealing member is disposed at the joint between the first box body 131 and the second box body 132, where the sealing member may be of a silicone sealing structure. The arrangement of the sealing member ensures the sealing performance of the connection between the first box body 131 and the second box body 132.

In an optional exemplary embodiment, the accommodation cavity is further provided with a centrifugal fan 1323, and the partition plate 133 is provided with an air inlet and an air outlet.

It should be noted that specifically, in this embodiment, the accommodation cavity is further provided with the centrifugal fan 1323, and the partition plate 133 is provided with the air inlet and the air outlet. The centrifugal fan 1323 may be used to accelerate the air circulation within the temperature adjustment space. Through the upper air outlet and lower air inlet, the temperature within the temperature adjustment space becomes uniform, increasing the air flow rate. This is more conducive to the cold circulation or heat circulation within the temperature adjustment space, allowing the temperature in the temperature adjustment space to reach a steady state more quickly.

For example, two centrifugal fans 1323 are provided, further increasing the air flow rate, which is more conducive to the cold circulation or heat circulation within the temperature adjustment space.

Specifically, in this embodiment, the centrifugal fan 1323 includes a long-axis axial flow fan, a stainless steel multi-blade centrifugal impeller, and a circulating air duct.

For example, the second box body 132 is further provided with a motor 1324, where the motor 1324 is drivingly connected to the centrifugal fan 1323 to drive the centrifugal fan 1323.

In an optional exemplary embodiment, the second box body 132 is provided with a lifting leg 1325 on a side away from the first box body 131, such that the second box body 132 leaves or approaches the hybrid connection structure 16.

It should be noted that specifically, in this embodiment, the second box body 132 is provided with the lifting leg 1325 on a side away from the first box body 131, such that the second box body 132 leaves or approaches the hybrid connection structure 16. In other words, the arrangement of the lifting leg 1325 is conducive to bringing the second box body 132 closer to the hybrid connection structure 16, allowing the height of the second box body 132 to be adjusted based on the height of the hybrid connection structure 16. This enables the entire temperature adjustment box 13 to better fit with the hybrid connection structure 16, bringing the heating member 1322, the cooling medium inlet 1332, and the centrifugal fan 1323 in the second box body 132 closer to the hybrid connection structure 16, thereby improving the efficiency of heating or cooling.

For example, in this embodiment, four lifting legs 1325 are provided, where the four lifting legs 1325 are arranged in a rectangular distribution at the bottom of the second box body 132.

In an optional exemplary embodiment, the first box body 131 has an observation window 1312 for observing the hybrid connection structure 16 in the temperature adjustment space.

It should be noted that specifically, in this embodiment, the first box body 131 has the observation window 1312 for observing the hybrid connection structure 16 in the temperature adjustment space. This helps the user to observe the hybrid connection structure 16 in the temperature adjustment space.

For example, in this embodiment, two observation windows 1312 are provided, where the two observation windows 1312 are symmetrically disposed on two sides of the first box body 131. This arrangement facilitates the user's observation of two opposite sides of the hybrid connection structure 16 placed in the temperature adjustment space.

It can be understood that the number of observation windows 1312 is not limited herein. In other specific embodiments, the number of observation windows 1312 may be set to three or four, or the like based on the user's actual needs, allowing the user to observe the hybrid connection structure 16 in the temperature adjustment space from more perspectives.

For example, the observation window 1312 is provided with a conductive film anti-condensation strip, ensuring that the internal hybrid connectors can be clearly observed through the observation window 1312 during the test process.

In an optional exemplary embodiment, a temperature sensor is disposed in the temperature adjustment space.

It should be noted that, specifically, in this embodiment, the temperature sensor is used to measure the temperature within the temperature adjustment space.

For example, to ensure more accurate measurement results, in this embodiment, five temperature sensors are provided, and distributed at different positions in the temperature adjustment space. During the test process, when the temperatures displayed by the five temperature sensors at different positions are the same, it indicates that the temperatures within the temperature adjustment space tend to be uniform.

For example, in this embodiment, the five temperature sensors are arranged as follows: Two opposite observation windows 1312 are each provided with one temperature sensor to measure the temperatures on the two opposite sides of the hybrid connection structure 16; the air inlet and the air outlet of the partition plate 133 are each provided with one temperature sensor; and one temperature sensor is disposed at the top of the first box body 131 away from the second box body 132. By means of placing one temperature sensor at each of these five representative positions, when the temperatures at all five positions are the same, it indicates that the temperatures within the temperature adjustment space tend to be uniform.

In an optional exemplary embodiment, the thermal testing apparatus 10 of a hybrid connection structure further includes a control apparatus, where the heating member 1322 and the cooling member of the temperature adjustment box 13 are electrically connected to the control apparatus. In this way, it is convenient to control the activation or deactivation of heating or cooling, as well as the adjustment of heating or cooling, using the control apparatus.

For example, the cooling member is a liquid nitrogen bottle filled with liquid nitrogen, delivering the liquid nitrogen to the temperature adjustment space via the cooling medium inlet 1332, thereby reducing the temperature within the temperature adjustment space.

For example, the heating member 1322 is an electric heater, which can achieve heating by being powered on during use.

In this embodiment, to ensure the safety of the test, the calibrated thermal testing apparatus 10 of a hybrid connection structure can withstand three times or more of the estimated damage load of the test.

For example, in this embodiment, to ensure the strength of the first connector 11 and the second connector 12, the first connector 11 and the second connector 12 are both made of alloy steel or ultra-high-strength steel.

For example, the thermal testing apparatus 10 of a hybrid connection structure further includes two testing machine clamping members 14, where the testing machine is connected to the first connector 11 and the second connector 12 via the testing machine clamping members 14.

This application further provides a test method, based on the thermal testing apparatus 10 of a hybrid connection structure described above, including:

assembling the hybrid connection structure 16 by connecting the two ends of the hybrid connection structure 16 to the first connector 11 and the second connector 12 respectively, mounting the temperature adjustment box 13 at a preset position of the hybrid connection structure 16, and arranging a strain gauge at a preset position of the hybrid connection structure 16;
performing a load test by applying the loads to the two ends of the hybrid connection structure 16 via the first connector 11 and the second connector 12 until the hybrid connection structure 16 is damaged; and performing a temperature test by using the temperature adjustment box 13 to adjust a temperature to a preset temperature, and recording strain data of the hybrid connection structure 16.

The test method provided by the embodiments of this application, based on the thermal testing apparatus 10 of a hybrid connection structure described above, also allows for the conduction of the static test, temperature strain test, and static test in a preset temperature environment on the hybrid connection structure 16, effectively ensuring the accuracy of the test results.

It should also be noted that, in this embodiment, there is no sequential order between the load test and the temperature test, and they can be adaptively adjusted according to the user's needs. Additionally, based on the user's needs, temperature test conditions can be added during the load test, enabling a comprehensive test on the hybrid connection structure 16 under combined temperature factors.

Specifically, during the test process, in the course of the load test, the hybrid connection structure 16 is pre-stretched, and then heated or cooled. After the preset test temperature is reached and the temperature within the temperature adjustment space is stable at this preset temperature, load control is applied to the hybrid connectors. This arrangement can reduce the influence of internal thermal stress in the hybrid connection structure 16 on the deformation of the composite material and the metal mechanical connection region in the middle of the hybrid connection structure 16, facilitating the measurement of internal deformation coordination data in the mechanical connection region. For example, in a locked low-temperature environment, during static stretching until the hybrid connection structure 16 is damaged, the control mode is locked to displacement control, and loading continues until the hybrid connection structure 16 is damaged. This can make the loading process smoother and the test process safer.

Specifically, during the test process, in the course of the temperature test, the testing machine is first adjusted to load control to minimize the influence of internal additional loads on the hybrid connection structure 16 during the heating or cooling process. During the heating or cooling process, the control mode of the testing machine is locked to load control, allowing the two ends and the connection region of the hybrid connection structure 16 to deform freely in a temperature-changing environment. The metal mechanical connection region of the intermediate composite material tends to produce different deformation amounts due to different thermal expansion coefficients of the materials. However, due to the constraint of connecting bolts, the composite material plate and the metal plate ultimately achieve deformation coordination, tending to produce the same displacement. This results in additional loads caused by thermal stress within the connection region, which are recorded by the strain gauge 17 as deformation coordination data of the composite material and metal mechanical connection structure in the middle of the hybrid connector in high- or low-temperature environments, providing a reference for studying deformation mechanisms.

In an optional exemplary embodiment, before the load test, the method further includes:

adjusting heights of two sides of the hybrid connection structure 16 to align the loads applied to the two ends of the hybrid connection structure 16 on a same horizontal line; and
calculating a height difference between two symmetrical sides of the hybrid connection structure 16, and using the height compensation component 15 to lift a lower side of the hybrid connection structure 16 until the two symmetrical sides of the hybrid connection structure 16 are located on the same horizontal line.

It should be noted that in this embodiment, heights of two sides of the hybrid connection structure 16 are adjusted to align the loads applied to the two ends of the hybrid connection structure 16 on the same horizontal line. This effectively resolves the significant misalignment problem of the hybrid connection structure 16 caused by tolerance, gap, and the like, further ensuring the accuracy of the test structure. In addition, this enables the thermal testing apparatus provided by the embodiments of this application to be applicable to large-scale test pieces.

The height difference between two symmetrical sides of the hybrid connection structure 16 is calculated, and then the height compensation component 15 is used to lift a lower side of the hybrid connection structure 16 until the two symmetrical sides of the hybrid connection structure 16 are located on the same horizontal line.

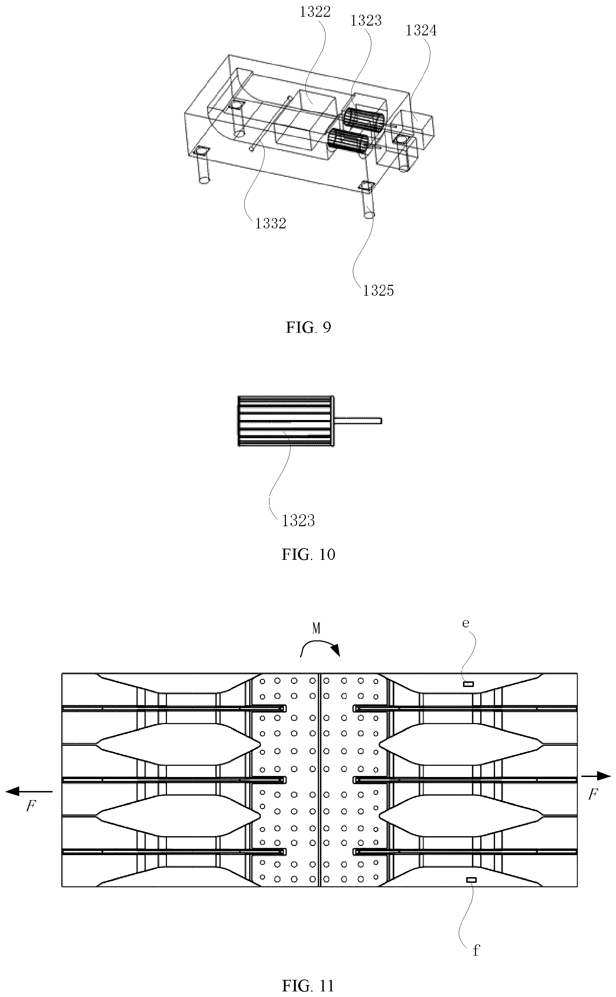

For example, since the loading axes of the first connector 11 and the second connector 12 are not on the same horizontal line, the material undergoes eccentric tension, and its stress state can be simplified as shown in FIG. 11. At symmetrical measurement points 1 and 2, measurement point 1 is as shown by "e" in the figure, and measurement point 1 is as shown by "f" in the figure.

The strain consists of two parts: the strain $\varepsilon_F$ caused by the loading force F is as follows:

$$\varepsilon_F = \frac{F}{EA}$$

where F is a test loading force; E is an equivalent Young's modulus of the composite material wall plate of the test piece; and A is a cross-sectional area of the wall plate portion of the hybrid connection structure 16.

An eccentric bending moment $M$ is derived from the test loading force and an eccentric distance:

$$M = F \cdot b$$

where b is the eccentric distance.

The strain $\varepsilon_M$ caused by the eccentric bending moment $M$ is as follows:

$$\varepsilon_M = \frac{M \cdot y}{EI_z}$$

where $Iz$ is a moment of inertia; and $y$ is half the width of the hybrid connection structure 16 in the vertical direction; and

the strain at measurement point 1 is $\varepsilon_1 = \varepsilon_F + \varepsilon_M$, and the strain at measurement point 2 is $\varepsilon_2 = \varepsilon_F - \varepsilon_M$. Through pre-experiments, the strain test results $\varepsilon_{test1}$ and $\varepsilon_{test2}$ at measurement points 1 and 2 can be substituted into the above formula, to calculate the eccentric distance as follows:

$$b = \frac{E \cdot I_z (\varepsilon_{test1} - \varepsilon_{test2})}{2F \cdot y}$$

Based on the above formula, the value of the eccentric distance b is calculated. The hoisting jack is used to lift the height to b, and the height compensation component 15 is used to raise the lower side by the dimension b, balancing errors such as the positional error of the loading axis hole and assembly error, thus ensuring that the hybrid connection structure 16 is in a horizontally tensioned state.

In an optional exemplary embodiment, the temperature test specifically includes:

performing a heating test by activating a heating mode of the temperature adjustment box 13, performing heating at intervals of a preset temperature segment, and maintaining the temperature within a preset duration when the temperature of the temperature adjustment space of the temperature adjustment box 13 is stable at a first target temperature, and recording readings of the strain gauge 17, where the hybrid connection structure 16 is provided with multiple strain gauges 17 for measuring strain of the hybrid connection structure 16;

performing a cooling test by activating a cooling mode of the temperature adjustment box 13, performing cooling from the first target temperature at intervals of a preset temperature segment, maintaining the temperature within a preset duration when the temperature of the temperature adjustment space of the temperature adjustment box 13 is stable at a second target temperature, and recording the readings of the strain gauge 17; and

repeating the heating test and the cooling test a preset number of times.

It should be noted that, through the heating test and the cooling test, strain tests of the hybrid connection structure 16 in high-temperature and low-temperature environments can be achieved.

For example, in this embodiment, the preset temperature segment may be set to 20°C, meaning temperature adjustment is performed every 20°C; the first target temperature is 90°C; the duration for the preset temperature maintenance is 120 min; the second target temperature is -55°C; and the preset number of repetitions is three temperature cycles.

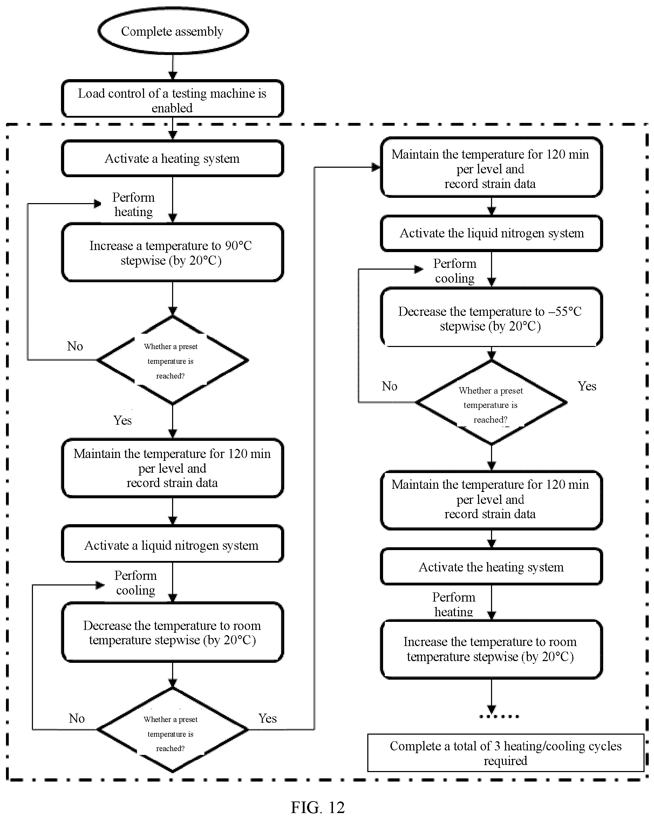

Taking the above data as an example, the temperature test, as shown in FIG. 12, specifically includes:

activating the temperature control system to heat the temperature adjustment space from room temperature, and performing heating every 20°C; and when the temperature values fed back by the five temperature sensors in the temperature adjustment space are the same and stable at the preset temperature value, maintaining the temperature for 120 min, until the temperature rises to 90°C, maintaining it for 120 min, and recording the readings of strain gauge; performing cooling every 20°C from 90°C, and when the temperature values fed back by the five temperature sensors are the same and stable at the preset temperature value, maintaining the temperature for 120 min, until it drops to room temperature; performing cooling every 20°C from room temperature, when the temperature values fed back by the five temperature sensors are the same and stable at the preset temperature value, maintaining the temperature for 120 min, until it drops to -55°C, maintaining it for 120 min, and recording the readings of the strain gauge; and performing heating every 20°C, maintaining the temperature for 120 min when the temperature values fed back by the five temperature sensors are the same and stable at the preset temperature value, which gradually rises to room temperature, and completing one cycle of the heating test and cooling test.

After three temperature cycles in the thermal stress test procedure are completed, when the temperature drops to -55°C, tensile loads are applied to the hybrid connection structure to conduct a static tensile test at the low temperature.

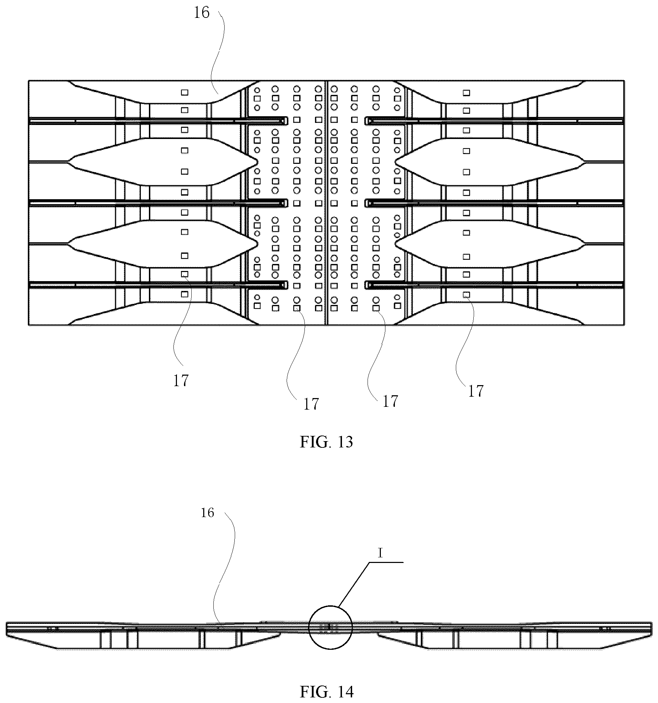

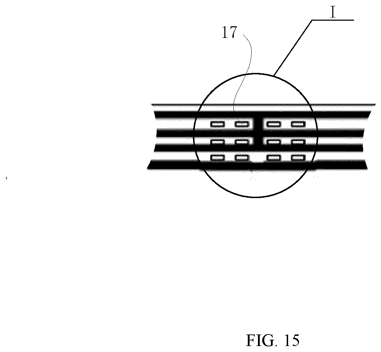

For example, in this embodiment, to obtain more accurate test data, the strain gauges 17 used to collect test data during the test process are attached to the wall plate of the hybrid connection structure 16, near the connection positions between the hybrid connection structures 16, that is, the connection points where multiple structures are fixedly connected, such as the positions where multiple layers of hybrid structures are connected by screws or bolts. The placement positions of the strain gauges 17 are shown in FIG. 13, FIG. 14, and FIG. 15.

In an optional exemplary embodiment, the temperature test further includes:

after the repeating the heating test and the cooling test a preset number of times, when the temperature of the temperature adjustment space of the temperature adjustment box 13 is stable at the first target temperature, applying the loads to the two ends of the hybrid connection structure 16 via the first connector 11 and the second connector 12 until the hybrid connection structure 16 is damaged; or after the repeating the heating test and the cooling test a preset number of times, when the temperature of the temperature adjustment space of the temperature adjustment box 13 is stable at the second target temperature, applying the loads to the two ends of the hybrid connection structure 16 via the first connector 11 and the second connector 12 until the hybrid connection structure 16 is damaged.

It should be noted that, specifically, in this embodiment, the temperature test further includes: after the repeating the heating test and the cooling test a preset number of times, when the temperature of the temperature adjustment space of the temperature adjustment box 13 is stable at the first target temperature, the loads are applied to the two ends of the hybrid connection structure 16 via the first connector 11 and the second connector 12 until the hybrid connection structure 16 is damaged, which facilitates the static test of the hybrid connection structure 16 placed in a high-temperature environment.

It should be noted that, specifically, in this embodiment, the temperature test further includes: after the repeating the heating test and the cooling test a preset number of times, when the temperature of the temperature adjustment space of the temperature adjustment box 13 is stable at the second target temperature, applying the loads to the two ends of the hybrid connection structure 16 via the first connector 11 and the second connector 12 until the hybrid connection structure 16 is damaged. This facilitates the static test of the hybrid connection structure 16 placed in a low-temperature environment.

In an optional exemplary embodiment, the sequence of the thermal test for the hybrid connection structure 16 may also be as follows:

A temperature load test is performed first, including:

a preliminary test: loading stepwise to 30% of the damage load with a 5% damage load increment, reducing the load stepwise with a 10% damage load decrement, and checking the stress condition of the test piece, as well as the operational status of the first connector 11, the second connector 12, the temperature sensor, and the testing machine; applying a preload of 15% of the damage load to the hybrid connection structure 16, locking the hoisting jack, and keeping the hybrid connection structure 16 in a constrained state; and applying temperature loads, gradually performing heating from room temperature to 90°C, maintaining it for 120 min at every 20°C increase, performing cooling stepwise to room temperature, maintaining the temperature, gradually performing cooling from room temperature to -55°C, maintaining it for 120 min at every 20°C decrease, and performing strain measurement.

A low-temperature damage load test is then performed, specifically including:

starting the test after the temperature is maintained at -55°C for 120 min;

loading to 65% of the damage load with a 5% damage load increment;

loading to 67% of the damage load with a 2% damage load increment, and holding the load until data recording is completed;

loading to 70% of the damage load with a 3% damage load increment, and holding the load until data recording is completed;

loading to 100% of the damage load with a 5% damage load increment, holding the load for 3 S, and holding the load until data recording is completed; and

if no damage occurs, continuing to increase the load by 5% of the damage load per level, with each loading being paused for some time to complete data recording, until damage occurs; and if the test piece is not damaged when 120% of the damage load is reached, stopping loading.

Finally, it should be noted that the above implementations are only used to illustrate the technical solutions of the present invention, not to limit them. Although the present invention has been described in detail with reference to the foregoing implementations, those of ordinary skill in the art should understand that they can still modify the technical solutions described in the foregoing implementations, or equivalently replace some or all of the technical features; and these modifications or replacements do not cause the essence of the corresponding technical solutions to depart from the scope of the technical solutions of the implementations of the present invention.

Additionally, it should be noted that the specific technical features described in the above specific implementations can be combined in any suitable manner provided there is no contradiction. To avoid unnecessary repetition, the present invention does not further describe various possible combinations.

## Claims

1. A thermal testing apparatus of a hybrid connection structure, for a thermal test of the hybrid connection structure, wherein the thermal testing apparatus of a hybrid connection structure comprises a first connector, a second connector, and a temperature adjustment box; wherein

   the first connector and the second connector are oppositely arranged to connect two ends of the hybrid connection structure, and loads are applied to the hybrid connection structure via the first connector and the second connector; and the temperature adjustment box is disposed between the first connector and the second connector, and configured to provide a preset temperature to the hybrid connection structure.

2. The thermal testing apparatus of a hybrid connection structure according to claim 1, wherein the first connector and the second connector are structurally same, each comprising a first connection mechanism and a second connection mechanism, the first connection mechanism and the second connection mechanism are hinged via an axle pin, and an end of the first connection mechanism away from the second connection mechanism is configured to connect to the hybrid connection structure.

3. The thermal testing apparatus of a hybrid connection structure according to claim 2, wherein

   the first connection mechanism is connected to the hybrid connection structure via a clamping mechanism, the clamping mechanism having a clamping space for clamping the hybrid connection structure;

   the first connection mechanism is provided with an accommodation space for accommodating the clamping mechanism, and the first connection mechanism and the clamping mechanism are fastened by a fastener; and

   at least two fasteners are provided, the at least two fasteners being equidistantly arranged at a joint between the first connection mechanism and the clamping mechanism.

4. The thermal testing apparatus of a hybrid connection structure according to claim 1, further comprising a height compensation component, wherein the height compensation component comprises a fixing mechanism and a telescopic support mechanism, the telescopic support mechanism has one end connected to the fixing mechanism, and the other end configured to support the hybrid connection structure, and the telescopic support mechanism is liftable relative to the fixing mechanism.

5. The thermal testing apparatus of a hybrid connection structure according to any one of claims 1 to 4, wherein the temperature adjustment box comprises a first box body and a second box body that are connected detachably, and the first box body and the second box body jointly form a temperature adjustment space for accommodating the hybrid connection structure; wherein

   the first box body has two openings communicating with the temperature adjustment space, the two openings respectively facing the first connector and the second connector; and

   the second box body has an accommodation cavity, a partition plate is disposed between the accommodation cavity and the temperature adjustment space, a cooling member and a heating member are disposed in the accommodation cavity, the partition plate is provided with a cooling medium inlet, and the cooling member delivers a cooling medium to the temperature adjustment space via the cooling medium inlet.

6. The thermal testing apparatus of a hybrid connection structure according to claim 5, wherein the accommodation cavity is further provided with a centrifugal fan, and the partition plate is provided with an air inlet and an air outlet; and/or

the second box body is provided with a lifting leg on a side away from the first box body, such that the second box body leaves or approaches the hybrid connection structure; and/or
the first box body has an observation window for observing the hybrid connection structure in the temperature adjustment space; and/or
a temperature sensor is disposed in the temperature adjustment space.

7. A test method, based on the thermal testing apparatus of a hybrid connection structure according to any one of claims 1 to 6, comprising:

assembling the hybrid connection structure by connecting the two ends of the hybrid connection structure to the first connector and the second connector respectively, mounting the temperature adjustment box at a preset position of the hybrid connection structure, and arranging a strain gauge at a preset position of the hybrid connection structure;
performing a load test by applying the loads to the two ends of the hybrid connection structure via the first connector and the second connector until the hybrid connection structure is damaged; and
performing a temperature test by using the temperature adjustment box to adjust a temperature to a preset temperature, and recording strain data of the hybrid connection structure.

8. The test method according to claim 7, before the load test, further comprising:

adjusting heights of two sides of the hybrid connection structure to align the loads applied to the two ends of the hybrid connection structure on a same horizontal line; and
calculating a height difference between two symmetrical sides of the hybrid connection structure, and using the height compensation component to lift a lower side of the hybrid connection structure until the two symmetrical sides of the hybrid connection structure are located on the same horizontal line.

9. The test method according to claim 8, wherein the temperature test specifically comprises:

performing a heating test by activating a heating mode of the temperature adjustment box, performing heating at intervals of a preset temperature segment, and maintaining the temperature within a preset duration when the temperature of the temperature adjustment space of the temperature adjustment box is stable at a first target temperature, and recording readings of the strain gauge, wherein the hybrid connection structure is provided with multiple strain gauges for measuring strain of the hybrid connection structure;
performing a cooling test by activating a cooling mode of the temperature adjustment box, performing cooling from the first target temperature at intervals of a preset temperature segment, maintaining the temperature within a preset duration when the temperature of the temperature adjustment space of the temperature adjustment box is stable at a second target temperature, and recording the readings of the strain gauge; and
repeating the heating test and the cooling test a preset number of times.

10. The test method according to claim 9, wherein the temperature test further comprises:

after the repeating the heating test and the cooling test a preset number of times, when the temperature of the temperature adjustment space of the temperature adjustment box is stable at the first target temperature, applying the loads to the two ends of the hybrid connection structure via the first connector and the second connector until the hybrid connection structure is damaged; or
after the repeating the heating test and the cooling test a preset number of times, when the temperature of the temperature adjustment space of the temperature adjustment box is stable at the second target temperature, applying the loads to the two ends of the hybrid connection structure via the first connector and the second connector until the hybrid connection structure is damaged.

EP 4 610 623 A1

FIG. 1

FIG. 2

FIG. 3

16

111

FIG. 4

112

FIG. 5

114

FIG. 6

131

1312

133

1311

132

1325

1332

1323 1322

FIG. 7

131

1312

1311

FIG. 8

1322    1323    1324

1332

1325

FIG. 9

1323

FIG. 10

M    e

F    F

f

FIG. 11

FIG. 12

16

17

17 17 17 17

FIG. 13

16

I

FIG. 14

FIG. 15

## INTERNATIONAL SEARCH REPORT

| International application No. |
| --- |
| **PCT/CN2023/122014** |

### A. CLASSIFICATION OF SUBJECT MATTER

G01N3/18(2006.01)i; G01N3/04(2006.01)i; G01N3/06(2006.01)i

According to International Patent Classification (IPC) or to both national classification and IPC

### B. FIELDS SEARCHED

Minimum documentation searched (classification system followed by classification symbols)

IPC: G01N3/-, G01M13/-

Documentation searched other than minimum documentation to the extent that such documents are included in the fields searched

Electronic data base consulted during the international search (name of data base and, where practicable, search terms used)

CNTXT, ENTXTC, DWPI: 热力, 热疲劳, 热应力, 试验, 实验, 测试, 调温, 控温, 温度, 箱, 室, 腔, 载荷, 荷载; thermal, heat, stress, strain, fatigue, load, chang???, adjust???, regulat???, temperature, thermolator, box, case, chest, cavity, chamber

### C. DOCUMENTS CONSIDERED TO BE RELEVANT

| Category* | Citation of document, with indication, where appropriate, of the relevant passages | Relevant to claim No. |
| --- | --- | --- |
| PX | CN 115931591 A (BEIJING AERONAUTIC SCIENCE AND TECHNOLOGY RESEARCH INSTITUTE, COMMERCIAL AIRCRAFT CORPORATION OF CHINA et al.) 07 April 2023 (2023-04-07) claims 1-10 | 1-10 |
| Y | CN 113720706 A (CHINA AIRPLANE STRENGTH RESEARCH INSTITUTE) 30 November 2021 (2021-11-30) description, paragraphs [0002] and [0040]-[0065] | 1-10 |
| Y | CN 103674681 A (CHINA CONSTRUCTION CO., LTD. et al.) 26 March 2014 (2014-03-26) description, paragraphs [0032]-[0043], and figures 1-8 | 1-10 |
| Y | CN 115060484 A (BEIJING AERONAUTIC SCIENCE AND TECHNOLOGY RESEARCH INSTITUTE, COMMERCIAL AIRCRAFT CORPORATION OF CHINA et al.) 16 September 2022 (2022-09-16) description, paragraphs [0048]-[0092], and figures 1-13 | 2-4, 8-10 |
| A | CN 111996347 A (TIANJIN UNIVERSITY) 27 November 2020 (2020-11-27) entire document | 1-10 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 December 2023** | **07 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/122014** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113933173 A (CHINA SHIP SCIENTIFIC RESEARCH CENTER) 14 January 2022 (2022-01-14)<br>    entire document | 1-10 |
| A | CN 114608938 A (QINGDAO UNIVERSITY OF SCIENCE AND TECHNOLOGY) 10 June 2022 (2022-06-10)<br>    entire document | 1-10 |
| A | US 2007169563 A1 (KABUSHIKI KAISHA TOYOTA CHUO KENKYUSHO) 26 July 2007 (2007-07-26)<br>    entire document | 1-10 |

Form PCT/ISA/210 (second sheet) (July 2022)

## INTERNATIONAL SEARCH REPORT
### Information on patent family members

| International application No. |
| --- |
| **PCT/CN2023/122014** |

| Patent document cited in search report | | | Publication date (day/month/year) | Patent family member(s) | | | Publication date (day/month/year) |
| --- | --- | --- | --- | --- | --- | --- | --- |
| CN | 115931591 | A | 07 April 2023 | None | | | |
| CN | 113720706 | A | 30 November 2021 | None | | | |
| CN | 103674681 | A | 26 March 2014 | None | | | |
| CN | 115060484 | A | 16 September 2022 | None | | | |
| CN | 111996347 | A | 27 November 2020 | None | | | |
| CN | 113933173 | A | 14 January 2022 | CN | 113933173 | B | 20 June 2023 |
| CN | 114608938 | A | 10 June 2022 | WO | 2023109454 | A1 | 22 June 2023 |
| US | 2007169563 | A1 | 26 July 2007 | JP | 2007198783 | A | 09 August 2007 |
| | | | | JP | 4479664 | B2 | 09 June 2010 |
| | | | | US | 7975557 | B2 | 12 July 2011 |

Form PCT/ISA/210 (patent family annex) (July 2022)